# FASCICULE DE BREVET EUROPEEN

(11) **EP 3 941 772 B1**
(45) Date de publication et mention de la délivrance du brevet: **23.08.2023**
(21) Numéro de dépôt: 20713706.8
(22) Date de dépôt: 21.02.2020
(51) Int. Cl.: B60K 35/00, B60K 37/04, B60Q 3/00, B60Q 3/14, B60Q 3/54, B60Q 3/62, B60Q 3/64, G02B 6/00, F21V 8/00

(54) **DISPOSITIF D'ÉCLAIRAGE INTÉRIEUR D'UN VÉHICULE AUTOMOBILE, COMPRENANT UNE PAROI TRANSPARENTE POURVUE D'UN ORGANE DE POSITIONNEMENT SUR LE DISPOSITIF QUI EST CONFIGURÉ EN GUIDE DE LUMIÈRE**
INNENBELEUCHTUNGSVORRICHTUNG FÜR EIN KRAFTFAHRZEUG MIT EINER TRANSPARENTEN WAND MIT EINEM ELEMENT ZUM POSITIONIEREN DERSELBEN AN DER ALS LICHTLEITER KONFIGURIERTEN VORRICHTUNG
INTERIOR LIGHTING DEVICE FOR A MOTOR VEHICLE, COMPRISING A TRANSPARENT WALL PROVIDED WITH A MEMBER FOR POSITIONING SAME ON THE DEVICE WHICH IS CONFIGURED AS A LIGHT GUIDE

(30) Priorité: 22.03.2019 FR 1902971
(43) Date de publication de la demande: 26.01.2022
(73) Titulaire: PSA Automobiles SA, 78300 Poissy (FR)
(72) Inventeur: SCHNURIGER, Damien, 91300 MASSY (FR); NORAIS, Marc, 78500 SARTROUVILLE (FR); ROYER, Guillaume, 91680 BRUYERES LE CHATEL (FR)
(86) Numéro de dépôt international: PCT/FR2020/050334
(87) Numéro de publication internationale: WO 2020/193891

(56) Documents cités:
- DE-B3- 10 341 622
- JP-A- 2015 041 486
- US-A1- 2006 152 937

## Description

### Domaine technique de l'invention

L'invention relève du domaine de l'agencement des dispositifs d'éclairage intérieur d'un véhicule automobile, tel que par exemple un plafonnier ou une liseuse. L'invention concerne plus spécifiquement un tel dispositif d'éclairage utilisant au moins un guide de lumière.

### Art antérieur

Les véhicules automobiles sont couramment équipés de dispositifs d'éclairage intérieur, comme par exemple un plafonnier ou une liseuse. De tels dispositifs d'éclairage comprennent essentiellement un boîtier logeant au moins une source lumineuse génératrice d'un flux lumineux, et au moins un dispositif optique de guidage du dit flux lumineux vers une paroi transparente à travers laquelle émerge la lumière issue du flux lumineux.

Ladite au moins une source lumineuse est communément montée sur une carte électronique de commande qui régule son activation pour générer le flux lumineux. La carte électronique de commande est notamment montée en fond du boîtier dont un débouché est fermé par la paroi transparente. La carte électronique de commande intègre couramment un circuit de commande sélective de l'activation de ladite au moins une source lumineuse.

Il est désormais courant que de tels dispositifs d'éclairage soient équipés d'une ou de plusieurs DEL (d'après l'acronyme de **D**iode **E**lectro**L**uminescente) constitutives de ladite au moins une source lumineuse. Une ou plusieurs sources lumineuses peuvent être respectivement affectées à des fonctions d'éclairage spécifiques, tel que par exemple l'éclairage de l'habitacle du véhicule et/ou le rétroéclairage d'un pictogramme.

Plus particulièrement, les dispositifs d'éclairage intérieur d'un véhicule automobile peuvent cumuler plusieurs fonctionnalités d'éclairage distinctes. Par exemple, un même dispositif d'éclairage comme un plafonnier peut fournir un faisceau lumineux principal d'éclairage de l'habitacle, un faisceau lumineux secondaire à fonction de liseuse pour l'un au moins des passagers du véhicule, et/ou un ou plusieurs faisceaux lumineux annexes de rétroéclairage respectivement d'un ou de plusieurs pictogrammes qui sont potentiellement ménagés en surface de la paroi transparente.

Un ou plusieurs masques sont couramment interposés entre la source lumineuse et la paroi transparente, pour faire obstacle au passage de la lumière en des zones prédéfinies de la paroi transparente. Il est courant de positionner et de fixer la paroi transparente sur le masque, qui est lui-même positionné et fixé à l'intérieur du boîtier. Un tel masque comporte au moins une ouverture pour le passage de la lumière à son travers, depuis la source lumineuse vers la paroi transparente via un dit dispositif optique. Ainsi, le faisceau lumineux en sortie du dispositif optique peut émerger à travers la paroi transparente seulement en une ou plusieurs zones sélectionnées, telles que notamment celles comportant de dits pictogrammes.

Il est devenu fréquent que le dispositif optique comprennent au moins un guide de lumière affecté à l'acheminement de la lumière générée par au moins une source lumineuse vers la paroi transparente. Un tel guide de lumière est par exemple utilisé pour acheminer la lumière générée par la source lumineuse, depuis la carte électronique de commande vers un pictogramme ménagé en surface de la paroi transparente.

Le guide de lumière est alors fixé sur la carte électronique de commande, et s'étend vers la paroi transparente à travers le masque via une dite ouverture qu'il comporte. La lumière générée par la source lumineuse est captée par le guide de lumière qui le traverse pour son acheminement vers la paroi transparente. La lumière traverse alors la paroi transparente pour son émergence hors du dispositif d'éclairage via la paroi transparente.

Les passagers du véhicule disposent de divers organes de commande via lesquels ils peuvent sélectivement activer une ou plusieurs sources lumineuses du dispositif d'éclairage, selon la ou les fonctionnalités d'éclairage souhaitées, comme par exemple une fonction d'éclairage de l'habitacle, une fonction d'activation d'une liseuse et/ou une fonction de rétroéclairage d'un ou de plusieurs pictogrammes ménagés en surface de la paroi transparente.

Tel qu'il ressort par exemple du document FR 3 056 471-A1- (DAV), un tel organe de commande peut lui-même être agencé en dispositif d'éclairage d'un visuel lumineux. Le visuel lumineux est formé d'un guide de lumière logé dans l'organe de commande, pour fournir un retour d'information au passager lorsqu'il manipule l'organe de commande.

Les documents JP2015041486, DE10341622 et US2006152937 décrivent différents dispositifs d'éclairage avec comportant un guide de lumière guidant la lumière émise par une source de lumière.

### Présentation générale de l'invention

Cependant, il est avantageux qu'un même dispositif d'éclairage intérieur d'un véhicule automobile puisse être utilisé et/ou être facilement adapté pour son installation sur divers véhicules présentant des architectures spécifiques.

Il est alors à rechercher une simplification de l'agencement du dispositif d'éclairage, notamment en limitant la diversité et/ou le nombre de ses composants, afin de simplifier les modalités d'aménagement du dispositif d'éclairage pour son implantation sur de tels véhicules diversifiés, de limiter les éventuels surcoûts qui en résultent et/ou d'optimiser le retour sur investissement du dispositif d'éclairage.

La présente invention s'inscrit dans un tel cadre de recherche et a pour objet un dispositif d'éclairage intérieur d'un véhicule équipé d'au moins un guide de lumière.

L'invention a aussi pour objet un véhicule automobile équipé d'au moins un dispositif d'éclairage conforme à l'invention.

Un dispositif d'éclairage intérieur d'un véhicule automobile conforme à l'invention, comprend un boîtier logeant :
-) au moins une source lumineuse montée sur une carte électronique de commande,
-) au moins un masque muni d'au moins une paroi transparente montée sur le masque via au moins un organe de positionnement de la paroi transparente sur le masque, et
-) au moins un guide de lumière via lequel la lumière émise par la source lumineuse est apte à être acheminée vers la paroi transparente.

Dans ce contexte, l'invention est reconnaissable en ce que ledit au moins un organe de positionnement est configuré en guide de lumière. L'organe de positionnement est en outre coopérant au moins avec un guide de lumière avec lequel il forme un ensemble de guidage de la lumière émise par la source lumineuse vers la paroi transparente. Autrement dit et selon une autre approche, la lumière émise par la source lumineuse est guidé vers la paroi transparente via ledit ensemble de guidage, qui comprend un premier guide de lumière via lequel la lumière émise par la source lumineuse est acheminée vers un deuxième guide de lumière formé par ledit organe de positionnement de la paroi transparente sur le masque.

L'agencement de l'organe de positionnement en guide de lumière lui confère une double fonction. Une première fonction est une fonction de positionnement de la paroi transparente sur le masque. Une deuxième fonction est d'acheminer au moins en partie la lumière émise par la source lumineuse vers la paroi transparente. Le cumul de ces deux fonctions par l'organe de positionnement permet de simplifier l'agencement du dispositif et/ou de réduire le nombre de ses composants.

Plus particulièrement selon une forme de réalisation, l'organe de positionnement est agencé en doigt d'emboîtement à l'intérieur d'une ouverture ménagée à travers le masque. Une partie émergente de l'organe de positionnement hors de ladite ouverture en direction de la source lumineuse est coopérante par emboîtement avec le guide de lumière qui s'étend entre le masque et la source lumineuse.

Plus spécifiquement selon une forme de réalisation, le doigt constitutif de l'organe de positionnement est introduit en emboîtement glissant à travers l'ouverture que comporte le masque, et le guide de lumière comporte une cavité de réception par emboîtement d'une partie émergente du doigt.

De préférence, le doigt constitutif de l'organe de positionnement présente une section transversale constante, la notion "transversal" étant bien entendu comprise comme orientée perpendiculairement à l'orientation principale d'extension du doigt depuis la paroi transparente vers la source lumineuse. Le doigt est emboîté à l'intérieur de l'ouverture que comporte le masque et s'étend à section constante hors du masque vers la source lumineuse pour sa jonction par emboîtement à l'intérieur du guide de lumière.

Selon une forme de réalisation, l'organe de positionnement est intégré à la paroi transparente en étant issu de sa matière.

De préférence, la matière à partir de laquelle sont conjointement formés la paroi transparente et l'organe de positionnement est un polymère thermoplastique. Ledit polymère thermoplastique est plus spécifiquement une forme laiteuse d'un poly-méthacrylate de méthyle.

L'invention est notamment avantageusement applicable au rétroéclairage d'un pictogramme dont la paroi transparente est munie. Plus particulièrement selon une forme de réalisation, la paroi transparente comporte au moins un pictogramme lumineux dont le rétroéclairage est fourni par le guide de lumière via l'organe de positionnement.

Par exemple, le pictogramme est un visuel représentant l'état en position d'ouverture d'au moins un ouvrant d'un véhicule automobile.

Selon une forme de réalisation, le dispositif d'éclairage est agencé en plafonnier.

Selon une autre forme de réalisation, le dispositif d'éclairage est agencé en liseuse.

Il est compris ici que le dispositif d'éclairage est par exemple agencé en plafonnier, par exemple encore en liseuse, ou par exemple encore en plafonnier dont au moins une zone d'éclairage est agencé en liseuse.

L'invention a aussi pour objet un véhicule automobile reconnaissable en ce qu'il est équipé d'au moins un dispositif d'éclairage conforme à l'invention.

### Présentation des figures

L'invention sera mieux comprise à la lecture de la description détaillée qui suit d'un exemple de réalisation de la présente invention, en relation avec la figure suivante :

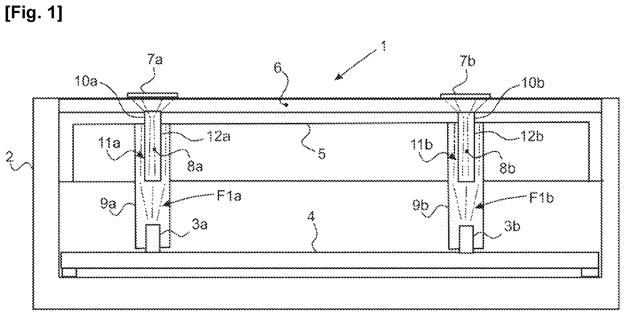

[Fig. 1] La figure 1 est une représentation schématique d'un dispositif d'éclairage intérieur d'un véhicule automobile selon un exemple de réalisation de l'invention.

### Description détaillée d'un mode de réalisation de l'invention

La figure unique et sa description détaillée non limitative, expose l'invention selon des modalités particulières qui ne sont pas restrictives quant à la portée de l'invention telle que définie par les revendications. La figure et sa description détaillée d'un exemple de réalisation de l'invention peut servir à mieux la définir, si besoin en relation avec la description générale qui vient d'en être faite.

Sur la figure 1, un dispositif d'éclairage 1 intérieur du véhicule comprend essentiellement un boîtier 2 logeant au moins une source lumineuse 3a, 3b qui est montée sur une carte électronique de commande 4 de son activation ou inversement de sa désactivation. Selon l'exemple illustré, la carte électronique de commande 4 est installée en fond du boîtier 2 et les sources lumineuses 3a, 3b sont au nombre de deux. Chacune des sources lumineuses 3a, 3b est génératrice d'un flux lumineux F1a, F1b et comprend par exemple au moins une DEL. Il est compris ici que les activations respectives des sources lumineuses 3a, 3b sont de préférence contrôlées individuellement par la carte électronique de commande 4, sans exclure leurs activations individuelles simultanées.

Le boîtier 2 présente une face ouverte vers l'extérieur qui est obturée par un masque 5 faisant obstacle à l'émergence hors du boîtier 2 de la lumière F1a, F1b générée par les sources lumineuses 3a, 3b. Le masque 5 est couvert à sa face orientée vers l'extérieur du boîtier 2 par une paroi transparente 6 comportant des pictogrammes 7a, 7b visibles depuis l'extérieur du boîtier 2, notamment visibles par les passagers du véhicule. Pour rétroéclairer les pictogrammes 7a, 7b, la lumière F1a, F1b générée par les sources lumineuses 3a, 3b est prévue d'émerger localement à travers la paroi transparente 6, dans ses zones sur lesquelles les pictogrammes 7a, 7b sont respectivement ménagés.

Pour positionner rigoureusement la paroi transparente 6 sur le masque 5, celle-ci intègre au moins un organe de positionnement 8a, 8b, au nombre de deux selon l'exemple de réalisation illustré. Les organes de positionnement 8a, 8b sont chacun configurés en guide de lumière, en étant issus de la paroi transparente 6 lors de son moulage.

Chacun des organes de positionnement 8a, 8b coopère avec un guide de lumière 9a, 9b qui s'étend à l'intérieur du boîtier 2 entre le masque 5 et une source lumineuse 3a, 3b. Les organes de positionnement 8a, 8b forment avec les guide de lumière 9a, 9b qui leur sont affectés, un ensemble de guidage de la lumière F1a, F1b générée par les sources lumineuses 3a, 3b vers les pictogrammes 7a, 7b pour leur rétroéclairage. Ainsi, chacun desdits ensembles de guidage est composé de deux guides de lumière successifs coopérant entre eux, dont un premier guide de lumière 9a, 9b s'étendant à l'intérieur du boîtier 2 entre une source lumineuse 3a, 3b et le masque 5, et dont un deuxième guide de lumière formé par l'organe de positionnement 8a, 8b.

Pour autoriser l'émergence de la lumière F1a, F1b à travers la paroi transparente 6 via les ensembles de guidage 3a, 9a et 3b, 9b de la lumière F1a, F1b, les organes de positionnement 8a, 8b traversent le masque 5 en étant emboîtés à l'intérieur d'ouvertures 10a, 10b respectives que comporte le masque 5. Chacun des organes de positionnement 8a, 8b est agencé en doigt qui émerge hors de l'ouverture 10a, 10b qui le reçoit, en s'étendant vers la source lumineuse 3a, 3b qui lui est affectée.

La partie émergente 11a, 11b hors des ouvertures 10a, 10b des organes de positionnement 8a, 8b est agencée en organe de réception par emboîtement du guide de lumière 9a, 9b avec lequel il est coopérant. A cet effet, Lesdites parties émergentes 11a, 11b des organes de positionnement 8a, 8b sont introduites par emboîtement à l'intérieur d'une cavité 12a, 12b que comporte les guides de lumière 9a, 9b avec lesquels les organes de positionnement 8a, 8b sont respectivement coopérant.

L'emboîtement des organes de positionnement 8a, 8b à l'intérieur desdites ouvertures 10a, 10b, d'une part procure le positionnement relatif entre la paroi transparente 6 et le masque 5, et d'autre part autorise le passage à travers les organes de positionnement 8a, 8b de la lumière F1a, F1b en provenance des guides de lumière 9a, 9b pour procurer le rétroéclairage des pictogrammes 7a, 7b.

## Revendications

1. Dispositif d'éclairage (1) intérieur d'un véhicule automobile, comprenant un boîtier (2) logeant au moins une source lumineuse (3a, 3b) montée sur une carte électronique de commande (4), au moins un masque (5) muni d'au moins une paroi transparente (6) montée sur le masque (5) via au moins un organe de positionnement (8a, 8b) de la paroi transparente (6) sur le masque (5), et au moins un guide de lumière (9a, 9b) via lequel la lumière (F1a, F1b) émise par la source lumineuse (3a, 3b) est apte à être acheminée vers la paroi transparente (6), ledit au moins un organe de positionnement (8a, 8b) étant configuré en guide de lumière, **caractérisé en ce que** l'organe de positionnement (8a, 8b) est coopérant au moins avec un guide de lumière (9a, 9b) avec lequel il forme un ensemble de guidage de la lumière (F1a, F1b) émise par la source lumineuse (3a, 3b) vers la paroi transparente (6).

2. Dispositif d'éclairage (1) selon la revendication 1, **caractérisé en ce que** l'organe de positionnement (8a, 8b) est agencé en doigt d'emboîtement à l'intérieur d'une ouverture (10a, 10b) ménagée à travers le masque (5), une partie émergente (11a, 11b) de l'organe de positionnement (8a, 8b) hors de ladite ouverture (10a, 10b) en direction de la source lumineuse (3a, 3b) coopérant par emboîtement avec le guide de lumière (9a, 9b) qui s'étend entre le masque (5) et la source lumineuse (3a, 3b).

3. Dispositif d'éclairage (1) selon l'une quelconque des revendications 1 à 2, **caractérisé en ce que** l'organe de positionnement (8a, 8b) est intégré à la paroi transparente (6) en étant issu de sa matière.

4. Dispositif d'éclairage (1) selon la revendication 3, **caractérisé en ce que** la matière à partir de laquelle sont conjointement formés la paroi transparente (6) et l'organe de positionnement (8a, 8b) est un polymère thermoplastique.

5. Dispositif d'éclairage (1) selon la revendication 4, **caractérisé en ce que** la paroi transparente (6) comporte au moins un pictogramme (7a, 7b) lumineux dont le rétroéclairage est fourni par le guide de lumière (9a, 9b) via l'organe de positionnement (8a, 8b).

6. Dispositif d'éclairage (1) selon la revendication 5, **caractérisé en ce que** le pictogramme (7a, 7b) est un visuel représentant l'état en position d'ouverture d'au moins un ouvrant d'un véhicule automobile.

7. Dispositif d'éclairage (1) selon l'une quelconque des revendications 1 à 6, **caractérisé en ce que** le dispositif d'éclairage (1) est agencé un plafonnier.

8. Dispositif d'éclairage (1) selon l'une quelconque des revendications 1 à 6, **caractérisé en ce que** le dispositif d'éclairage (1) est agencé en liseuse.

9. Véhicule automobile **caractérisé en ce qu'**il est équipé d'au moins un dispositif d'éclairage (1) selon l'une quelconque des revendications 1 à 8.

## Patentansprüche

1. Innenbeleuchtungsvorrichtung (1) eines Kraftfahrzeuges mit einem Gehäuse (2) zur Aufnahme mindestens einer auf einer elektronischen Steuerkarte (4) angeordneten Lichtquelle (3a, 3b), mindestens einer Maske (5) mit mindestens einer über mindestens ein Positionierorgan (8a, 8b) der transparenten Wand (6) auf der Maske (5) auf der Maske (5) angeordneten transparenten Wand (6) und mindestens einem Lichtleiter (9a, 9b), über den das von der Lichtquelle (3a, 3b) emittierte Licht (F1a, F1b) der transparenten Wand zuführbar ist (b) 6), wobei das mindestens eine Positionierorgan (8a, 8b) als Lichtleiter ausgebildet ist, **dadurch gekennzeichnet, dass** das Positionierorgan (8a, 8b) mindestens mit einem Lichtleiter (9a, 9b) zusammenwirkt, mit dem es eine Anordnung zur Führung des von der Lichtquelle (3a, 3b) zur transparenten Wand (6) ausgesandten Lichts (F1a, F1b) bildet.

2. Beleuchtungsvorrichtung (1) nach Anspruch 1, **dadurch gekennzeichnet, dass** das Positionierungsorgan (8a, 8b) als Steckfinger innerhalb einer Öffnung (10a, 10b) angeordnet ist, die durch die Maske (5) hindurch ausgebildet ist, wobei ein austretender Teil (11a, 11b) des Positionierungsorgans (8a, 8b) aus der Öffnung (10a, 10b) in Richtung auf die Lichtquelle (3a, 3b) heraus in Eingriff mit dem Lichtleiter (9a, 9b) steht, der sich zwischen ihm erstreckt Maske (5) und Lichtquelle (3a, 3b).

3. Beleuchtungsvorrichtung (1) nach einem der Ansprüche 1 bis 2, **dadurch gekennzeichnet, dass** das Positionierungsorgan (8a, 8b) aus seinem Material in die transparente Wand (6) integriert ist.

4. Beleuchtungsvorrichtung (1) nach Anspruch 3, **dadurch gekennzeichnet, dass** das Material, aus dem die transparente Wand (6) und das Positionierungsorgan (8a, 8b) zusammengebildet sind, ein thermoplastisches Polymer ist.

5. Beleuchtungsvorrichtung (1) nach Anspruch 4, **dadurch gekennzeichnet, dass** die transparente Wand (6) mindestens ein Lichtpiktogramm (7a, 7b) aufweist, dessen Hintergrundbeleuchtung durch den Lichtleiter (9a, 9b) über das Positionierungsorgan (8a, 8b) bereitgestellt wird.

6. Beleuchtungsvorrichtung (1) nach Anspruch 5, **dadurch gekennzeichnet, dass** das Piktogramm (7a, 7b) eine Anzeige ist, die den Zustand in der Öffnungsstellung mindestens eines Türflügels eines Kraftfahrzeugs darstellt.

7. Beleuchtungsvorrichtung (1) nach einem der Ansprüche 1 bis 6, **dadurch gekennzeichnet, dass** die Beleuchtungsvorrichtung (1) eine Deckenleuchte ist.

8. Beleuchtungsvorrichtung (1) nach einem der Ansprüche 1 bis 6, **dadurch gekennzeichnet, dass** die Beleuchtungsvorrichtung (1) als Glättmaschine ausgebildet ist.

9. Kraftfahrzeug, **dadurch gekennzeichnet, dass** es mit mindestens einer Beleuchtungsvorrichtung (1) nach einem der Ansprüche 1 bis 8 ausgerüstet ist.

## Claims

1. An interior lighting device (1) of a motor vehicle, comprising a housing (2) housing at least one light source (3a, 3b) mounted on an electronic control board (4), at least one mask (5) provided with at least one transparent wall (6) mounted on the mask (5) via at least one member (8a, 8b) for positioning the transparent wall (6) on the mask (5), and at least one light guide (9a, 9b) via which the light (F1a, F1b) emitted by the light source (3a, 3b) is able to be conveyed towards the transparent wall (6) said at least one positioning member (8a, 8b) is configured as a light guide, **characterized in that** the positioning member (8a, 8b) is cooperating at least with a light guide (9a, 9b) with which it forms an assembly for guiding the light (F1a, F1b) emitted by the light source (3a, 3b) towards the transparent wall (6).

2. Lighting device (1) according to claim 1, **characterized in that** the positioning member (8a, 8b) is arranged as a fitting finger inside an opening (10a, 10b) formed through the mask (5), an emerging part (11a, 11b) of the positioning member (8a, 8b) outside the said opening (10a, 10b) in the direction of the light source (3a, 3b) cooperating by fitting with the light guide (9a, 9b) which extends between the mask (5) and the light source (3a, 3b).

3. Lighting device (1) according to any one of claims 1 to 2, **characterized in that** the positioning member (8a, 8b) is integrated into the transparent wall (6) and comes from its material.

4. Lighting device (1) according to claim 3, **characterized in that** the material from which the transparent wall (6) and the positioning member (8a, 8b) are jointly formed is a thermoplastic polymer.

5. Lighting device (1) according to claim 4, **characterized in that** the transparent wall (6) comprises at least one luminous pictogram (7a, 7b) the backlighting of which is provided by the light guide (9a, 9b) via the positioning member (8a, 8b).

6. Lighting device (1) according to claim 5, **characterized in that** the pictogram (7a, 7b) is a visual representing the state in the open position of at least one opening leaf of a motor vehicle.

7. Lighting device (1) according to any one of claims 1 to 6, **characterized in that** the lighting device (1) is arranged as a ceiling lamp.

8. Lighting device (1) according to any one of claims 1 to 6, **characterized in that** the lighting device (1) is arranged as a reading lamp.

9. Motor vehicle, **characterized in that** it is equipped with at least one lighting device (1) according to any one of claims 1 to 8.
